(19)

**Europäisches Patentamt**
**European Patent Office**
**Office européen des brevets**

(11) **EP 4 733 893 A1**

(12) # EUROPEAN PATENT APPLICATION

(43) Date of publication:
**29.04.2026 Bulletin 2026/18**

(21) Application number: **25202808.9**

(22) Date of filing: **17.09.2025**

(51) International Patent Classification (IPC):
*G06F 1/20* (2006.01)

(52) Cooperative Patent Classification (CPC):
**G06F 1/206; G06F 1/203**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.10.2024 JP 2024188971**

(71) Applicant: **Lenovo (Singapore) Pte. Ltd.
New Tech Park 556741 (SG)**

(72) Inventors:
- **NAKABAYASHI, Mao
  Yokohama-shi, 220-0012 (JP)**

- **CHONAN, Tsutomu
  Yokohama-shi, 220-0012 (JP)**
- **NAKAMURA, Atsunobu
  Yokohama-shi, 220-0012 (JP)**
- **WATANABE, Ryota
  Yokohama-shi, 220-0012 (JP)**

(74) Representative: **Openshaw & Co.
8 Castle Street
Farnham, Surrey GU9 7HR (GB)**

Remarks:
A request for correction drawing Fig. 7 has been filed pursuant to Rule 139 EPC. A decision on the request will be taken during the proceedings before the Examining Division (Guidelines for Examination in the EPO, A-V, 3.).

(54) **ELECTRONIC APPARATUS AND CONTROL METHOD**

(57) The present invention aims to economically realize the operation of a fan more corresponding to a surface temperature with respect to an operation state of an electronic apparatus. In the electronic apparatus, a controller, a temperature sensor configured to detect a temperature, and a fan are accommodated inside a chassis. The controller and the temperature sensor are arranged on a substrate. A model indicating a correlation between an actually measured temperature which is a temperature detected by the temperature sensor and a surface temperature which is a temperature at a reference point on a surface of the chassis is set in the controller in advance. The controller uses the model to calculate an estimated value of the surface temperature based on the actually measured temperature, and controls an operation of the fan based on the estimated value.

FIG. 2

EP 4 733 893 A1

**Description**

BACKGROUND OF THE INVENTION

Field of the Invention

The present invention relates to an electronic apparatus and a control method, for example, temperature control of an electronic apparatus which accommodates various members inside a chassis.

Description of the Related Art

An electronic apparatus starting with a personal computer (PC) is configured to include devices each serving as a heat source. A device with high power consumption becomes a main heat source. The devices each serving as the heat source include, for example, a processor such as a CPU (Central Processing Unit). In order to prevent a failure or a fault due to a rise in temperature, many electronic apparatuses each include a heat dissipation mechanism. For example, in an information processing apparatus described in Japanese Unexamined Patent Application Publication No. 2014-78199, a temperature sensor is arranged on a substrate together with a device starting with a CPU, and a fan for dissipating heat generated in the device in accordance with a temperature detected by the temperature sensor is provided.

SUMMARY OF THE INVENTION

With miniaturization and multi-functionalization of an electronic apparatus, various devices may be mounted on a substrate at a high density. In a circuit in which devices are arranged at a high density, the amount of heat generated tends to increase. Further, the correlation between an actually measured temperature detected by a temperature sensor and a surface temperature may not be maintained depending on the usage state of the electronic apparatus. When the operation of a fan is controlled based on the temperature detected on the substrate, the fan would operate even when the surface temperature was relatively low. This operation may cause a user to feel uncomfortable.
The present application has been made to solve the above problems. There is provided an electronic apparatus according to one aspect of the present application, which includes a controller, a temperature sensor configured to detect a temperature, and a fan which are accommodated inside a chassis, and in which the controller and the temperature sensor are arranged on a substrate, the controller is set in advance with a model indicating a correlation between an actually measured temperature which is a temperature detected by the temperature sensor, and a surface temperature which is a temperature at a reference point on a surface of the chassis, and the controller uses the model to calculate an estimated value of the surface temperature based on the actually measured temperature, and controls an operation of the fan based on the estimated value.
The electronic apparatus may include a host system, and the host system may be arranged on the substrate and control power consumption of the own host system based on the estimated value.
The electronic apparatus may include two or more of the temperature sensors. The model may indicate a correlation between a set of the actually measured temperatures detected for the respective temperature sensors and the surface temperature. The controller may use the model to determine an estimated value of the surface temperature based on the set of the actually measured temperatures.
In the electronic apparatus described above, the reference point may be a position on the surface of the chassis where the temperature is the highest.
In the electronic apparatus described above, the reference point may be any one of a bottom surface of the chassis, a peripheral edge of an exhaust port of the chassis, and a surface of an input device covering the chassis.
In the electronic apparatus described above, a peripheral device may be further accommodated inside the chassis. The peripheral device may be further arranged on the substrate, and the model may be set with reference to a set of the actually measured temperature and the surface temperature detected for each scenario in which an operation state of the peripheral device is different.
There is provided a control method of an electronic apparatus according to one aspect of the present application, which includes a controller, a temperature sensor configured to detect a temperature, and a fan accommodated inside a chassis, and in which the controller and the temperature sensor are arranged on a substrate, and a model indicating a correlation between an actually measured temperature which is a temperature detected by the temperature sensor, and a surface temperature which is a temperature at a reference point on a surface of the chassis is set in advance, the control method including the steps of calculating, by the electronic apparatus an estimated value of the surface temperature based on the actually measured temperature using the model, and controlling an operation of the fan by the electronic apparatus based on the estimated value.
According to an embodiment of the present application, it is possible to economically realize the operation of a fan more corresponding to a surface temperature with respect to an operation state of an electronic apparatus.

BRIEF DESCRIPTION OF THE DRAWINGS

FIG. 1 is an external view illustrating an example of an external configuration of an electronic apparatus according to the present embodiment;
FIG. 2 is a schematic block diagram illustrating an example of a hardware configuration of the electronic apparatus according to the present embodiment;
FIG. 3 is a plan view illustrating an example of arrangement of devices inside a first chassis according to the present embodiment;
FIG. 4 is a schematic block diagram illustrating an example of a functional configuration of the electronic apparatus according to the present embodiment;
FIG. 5 is a flowchart illustrating an example of a control method of the electronic apparatus according to the present embodiment;
FIG. 6 is a diagram illustrating a correlation between an actually measured temperature and an estimated temperature; and
FIG. 7 is a diagram illustrating a control example of the electronic apparatus according to the present embodiment.

DETAILED DESCRIPTION OF THE INVENTION

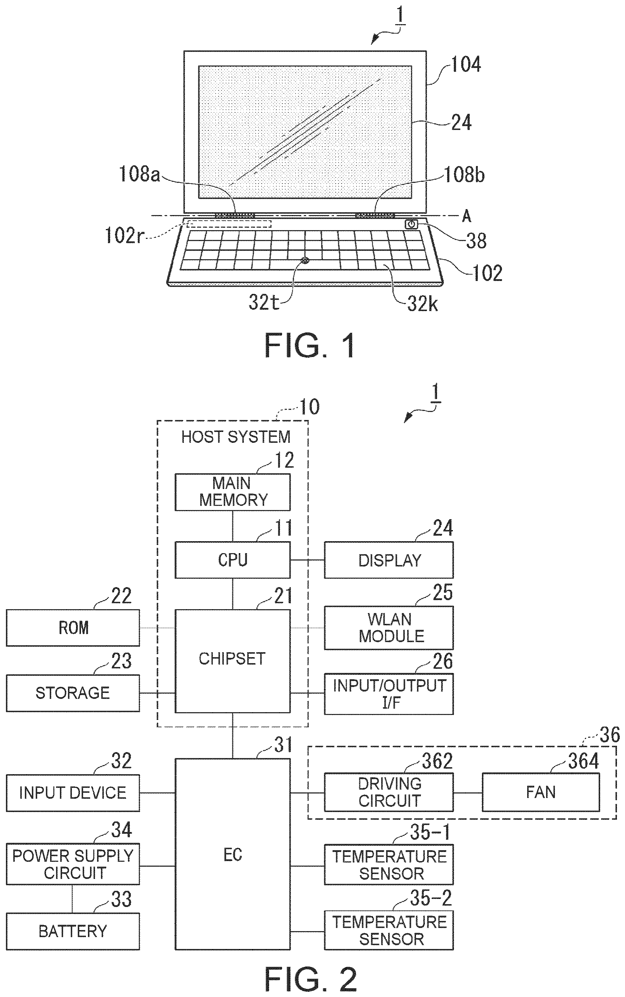

An embodiment of the present application will hereinafter be described with reference to the drawings. A configuration example of an electronic apparatus 1 according to the present embodiment will be described. FIG. 1 is an external view illustrating an example of an external configuration of the electronic apparatus 1 according to the present embodiment. In the example of FIG. 1, the electronic apparatus 1 is configured as a notebook type PC (which may be referred to as a "laptop PC").

The electronic apparatus 1 includes a first chassis 102 and a second chassis 104. The first chassis 102 and the second chassis 104 face each other in parallel on one side surface (which may be referred to as a "back surface" in the present application), and are engaged with each other so as to be rotatable around a rotational axis A by using hinges 108a and 108b. The first chassis 102 and the second chassis 104 are rotated to change the angle formed by the two. In a state in which an external force is not applied, the angle formed by the first chassis 102 and the second chassis 104 is maintained in a state of the electronic apparatus 1 being supported on the bottom surface of the first chassis 102 by the hinges 108a and 108b. When the angle formed by the first chassis 102 and the second chassis 104 becomes obtuse, the electronic apparatus 1 is in use in a state in which respective surfaces of the two chasses are open. Note that in the present application, the side surfaces of the first chassis 102 and the second chassis 104 opposite to the back surfaces thereof may be referred to as "front surfaces".

A power supply switch 38, a keyboard 32k, and a track point 32t are arranged on the surface of the first chassis 102. The power supply switch 38 is arranged close to and within a predetermined distance from one end of the back surface. The keyboard 32k covers most of the surface of the first chassis 102, and its periphery is supported by the first chassis 102. The track point 32t is arranged at the center part of the keyboard 32k.

A display 24 is arranged on the surface of the second chassis 104. The display 24 covers most of the surface of the second chassis 104.

Various members are accommodated in the first chassis 102 and the second chassis 104. As will be described later, a host system 10, an EC (Embedded Controller) 31, temperature sensors 35-1 and 35-2, a fan 364, and the like are accommodated inside the first chassis 102. The particular members which are part of them are arranged on the substrate in advance. For example, the host system 10, the EC 31, the temperature sensors 35-1 and 35-2, and the like are arranged on the substrate.

Next, a description will be made about an example of a hardware configuration of the electronic apparatus 1 according to the present embodiment. FIG. 2 is a schematic block diagram illustrating the example of the hardware configuration of the electronic apparatus 1 according to the present embodiment.

The electronic apparatus 1 includes the host system 10, a ROM (Read Only Memory) 22, a storage 23, the display 24, a WLAN (Wireless Local Area Network: Wireless LAN) module 25, an input/output I/F (Interface) 26, the EC 31, an input device 32, a battery 33, a power supply circuit 34, a temperature sensor 35, and a heat dissipation mechanism 36. In the example of FIG. 1, the electronic apparatus 1 include two temperature sensors 35-1 and 35-2. The heat dissipation mechanism 36 includes a drive circuit 362 and a fan 364.

The host system 10 is a computer system which forms the core of the electronic apparatus 1. The host system 10 includes a CPU (Central Processing Unit) 11, a main memory 12, and a chipset 21.

The CPU 11 is a processor which executes various programs. For example, programs such as firmware, an OS (Operating System), utility software, an application program are executed. In the present application, "executing a program" or "execution of a program" refers to executing processing instructed by a command described in the program. The CPU 11 realizes the function of the host system 10 in cooperation with the main memory 12 and other hardware by executing a program.

The main memory 12 is a writable memory which is used as an area for reading an execution program of the CPU 11 or a working area for writing processing data of the execution program. The main memory 12 is constituted of, for example, a plurality of DRAM (Dynamic Random Access Memory) chips. The CPU 11 and the main memory 12 are the minimum hardware which constitutes the host system 10.

The chipset 21 includes a plurality of controllers and can be connected to a plurality of devices so as to be able to input and output various data. The controller included in the chipset 21 may be, for example, any of a USB (Universal Serial Bus), an SPI (Serial Peripheral Interface) bus, a PCI-Express bus, and the like. In the example of FIG. 1, the chipset 21 is connected to the ROM 22, the storage 23, the display 24, the WLAN module 25, the input/output I/F 26, and the EC 31.

The ROM 22 mainly stores firmware. The firmware stored in the ROM 22 includes firmware such as BIOS (Unified Extensible Firmware Interface Basic Input/Output System), firmware for controlling individual devices, and the like. The ROM 22 may be any of an EEPROM (Electrically Erasable Programmable Read Only Memory), a flash ROM, and the like.

The storage 23 is an auxiliary storage device which stores various types of data used for processing of the host system 10, various types of data acquired by their processing, or various types of programs, and the like. The storage 23 may be, for example, any of an SSD (Solid State Drive), an HDD (Hard Disk Drive), and the like.

The display 24 displays a display screen based on display data input from the CPU 11. The display 24 may be, for example, any of a liquid crystal display (LCD), an OLED (Organic Light Emitting Diode) display, and the like.

The WLAN module 25 is connected to a WLAN so as to be able to transmit and receive various types of data. The WLAN module 25 can transmit and receive various types of data to and from a WLAN or another device connected to the other network via the WLAN. The other network may be, for example, any of the Internet, a public wireless network, a virtual private network, and the like.

The input/output I/F 26 is connected to various devices by wired or wireless communication so as to be able to input and output data. The input/output I/F 26 includes, for example, a USB connector. The USB connector is a connector for inputting and outputting data by wire according to the USB standard.

The EC 31 is a controller which monitors and controls the operations of various devices connected thereto, regardless of an operation state of the host system 10. The EC 31 includes a CPU, a ROM, a RAM, a timer, and an input/output I/F separately from the host system 10. Devices each having a lower data transfer speed than the chipset 21 can be connected to the EC 31. In the example of FIG. 1, the input device 32, the power supply circuit 34, the temperature sensors 35-1 and 35-2, and the heat dissipation mechanism 36 are connected to the EC 31.

The input device 32 detects an operation of a user, generates an operation signal in accordance with the detected operation, and outputs the generated operation signal to the EC 31. The keyboard 32k and track point 32t described above each correspond to an example of the input device 32.

The battery 33 is charged with electric power supplied from the power supply circuit 34. Alternatively, the battery 33 discharges the electric power stored therein to the power supply circuit 34. The battery may be, for example, any of a lithium ion battery, a sodium ion battery, and the like.

The power supply circuit 34 supplies electric power to each of the devices under the control of the EC 31. The power supply circuit 34 includes a charger and a transformer (DC/DC: Direct Current/Direct Current).

The charger charges the battery 33 with surplus power remaining without being consumed in each device, of the electric power supplied from an external power supply. When no electric power is supplied from the external power supply or when the electric power supplied therefrom does not satisfy the demand of each device, the charger supplies the electric power discharged from the battery 33 to each device via the transformer.

The transformer converts the voltage of DC power supplied from the external power supply or the battery 33 via the charger into a voltage required for the operation of each device. The transformer supplies DC power having the converted voltage to the provision destination device.

The temperature sensors 35-1 and 35-2 are arranged at different positions and detect temperatures at the respective positions. Each of the temperature sensors 35-1 and 35-2 notifies the EC 31 of an actually measured temperature which is an actually measured value of the detected temperature.

The heat dissipation mechanism 36 includes the drive circuit 362 and the fan 364.

The drive circuit 362 operates the fan 364 so as to obtain an output instructed by a control signal input from the EC 31. The drive circuit 362 supplies electric power corresponding to the instructed output to the fan 364.

The fan 364 includes a motor which rotates by consuming the electric power supplied from the drive circuit 362, and the motor rotates blades. An airflow is generated inside the first chassis 102 by the rotation of the blades, and new air flows in from the outside of the first chassis 102. The air which has flowed in absorbs heat emitted from the members inside the first chassis 102, and hence the temperature rises. The air whose temperature has increased is discharged to the outside of the first chassis 102.

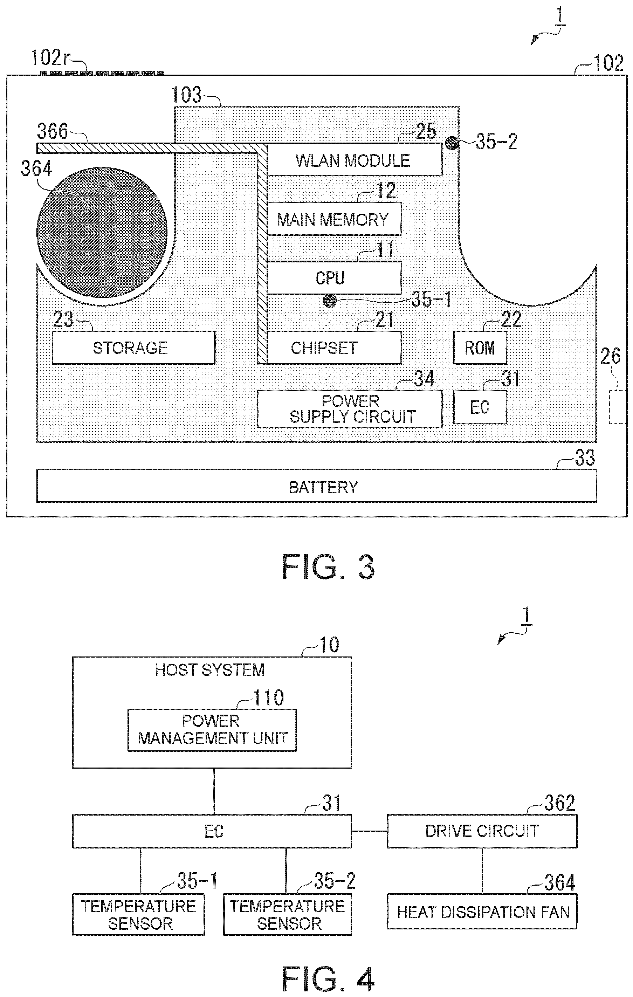

Next, a description will be made about an example of arrangement of devices inside the first chassis 102 according to the present embodiment. FIG. 3 is a plan view illustrating the example of arrangement of the devices inside the first chassis 102 according to the present embodiment. A substrate 103 is laid inside the first chassis 102. The CPU 11, the main memory 12, the chipset 21, the ROM 22, the storage 23, the WLAN module 25, the EC 31, the power supply circuit 34, the temperature sensors 35-1 and 35-2, and a heat pipe 366 are arranged on the surface of the substrate 103. The input/output I/F 26, the battery 33, the drive circuit 362, and the fan 364 are further arranged in the first chassis 102. The drive circuit 362 is configured integrally with the fan 364, and is not illustrated in FIG. 3.

An exhaust port 102r is installed in a region within a predetermined distance from the other end of the back surface of the first chassis 102. The periphery of the exhaust port 102r is surrounded by a rear bezel (not illustrated). The exhaust port 102r faces the fan 364 with one end of the heat pipe 366 interposed therebetween. A keyboard bezel (not illustrated) and the keyboard 32k (FIG. 1) are arranged on the surface of the first chassis 102 so as to overlap each other in this order. The keyboard bezel has a plurality of opening portions, through which air can flow from the surface of the keyboard 32k into the first chassis 102. When the fan 364 operates, the introduced air passes through an internal space of the first chassis 102, passes through the fan 364 and one end of the heat pipe 366, and is discharged from the exhaust port 102r. The air flowing into the first chassis 102 rises in temperature due to heat dissipation from each device and the heat pipe 366. By discharging the air increased in temperature, the rise in temperature inside the first chassis 102 is suppressed.

In the example of FIG. 3, the chipset 21, the CPU 11, the main memory 12, and the WLAN module 25 are arranged in this order from one end to the other end of the heat pipe 366. Heat generated in each of the chipset 21, the CPU 11, the main memory 12, and the WLAN module 25 is conducted toward one end of the heat pipe 366, and is radiated to the air around the one end.

Further, the temperature sensors 35-1 and 35-2 are arranged close to the CPU 11 and the WLAN module 25 within predetermined distances, respectively. Thus, it is possible to perform control in which the temperature of each of the CPU 11 and the WLAN module 25 having a relatively large heat generation amount is emphasized.

Note that the battery 33 is arranged on the front surface of the first chassis 102 so as to be parallel to its longitudinal direction. The input/output I/F 26 is arranged on a side end surface of the first chassis 102.

Next, a description will be made about an example of a functional configuration of the electronic apparatus 1 according to the present embodiment. FIG. 4 is a schematic block diagram illustrating the example of the functional configuration of the electronic apparatus 1 according to the present embodiment.

The EC 31 monitors the actually measured temperatures notified from the temperature sensors 35-1 and 35-2.

The EC 31 calculates an estimated value of the surface temperature at a predetermined reference point on the surface of the first chassis 102, based on the actually measured temperatures of the temperature sensors 35-1 and 35-2 using a mathematical model set in advance. The EC 31 calculates an estimated value $Y_{apu}$ (which may be referred to as an "estimated surface temperature $Y_{apu}$" in the present application) of a surface temperature from actually measured temperatures $X_1$ and $X_2$ of the temperature sensors 35-1 and 35-2 using, for example, a two variable regression model illustrated in an equation (1). In the equation (1), $M_1$ and $M_2$ indicate coefficients by which the actually measured temperatures $X_1$ and $X_2$ are multiplied, respectively. The coefficients $M_1$ and $M_2$ are weight coefficients indicating the degrees of contribution of the actually measured temperatures $X_1$ and $X_2$ to the estimated surface temperature $Y_{apu}$, respectively. $C_{apu}$ indicates a constant. Note that the order of the actually measured temperatures $X_1$ and $X_2$ may be set to the descending order of the coefficients $M_1$ and $M_2$. A learning method of the mathematical model will be described later.

$$Y_{apu} = M_1 \cdot X_1 + M_2 \cdot X_2 + C_{apu} \qquad \cdots (1)$$

The EC 31 refers to a control table to determine an output value of the fan 364 corresponding to the estimated surface temperature. The control table is set in advance in a register of the EC 31. The control table is a data table indicating the estimated surface temperature and the output value of the fan 364 in association with each other. In the control table, the output value is set to increase as the estimated surface temperature increases. The output value may be indicated by a rotational speed of the motor, or may be indicated by a noise level generated by rotation. The EC 31 outputs a control signal indicating a determined output amount to the drive circuit 362. A lower limit of an operation temperature of the fan 364 may be set to the control table in advance. When the estimated surface temperature is less than or equal to the lower limit of the operation temperature, the EC 31 sets the output value of the fan 364 to be zero. In that case, the operation of the fan 364 is stopped.

Note that the EC 31 notifies the host system 10 of the estimated surface temperature.

The host system 10 executes an OS to perform execution management of other programs, management of arithmetic resources such as a memory and a process, management of input/output to and from each device and the like.

The host system 10 includes a power management unit 110. The power management unit 110 controls power consumption based on the estimated surface temperature notified from the EC 31. The power management unit 110 controls the power consumption of the host system 10 by determining an operation mode based on the estimated surface temperature notified from the EC 31, for example.

Possible operation modes of the host system 10 include, for example, a standard mode and a thermal protection mode. Different power control parameters are set for each operation mode. The power control parameters include, for example, a PL1 (Power Limit 1) and a PL2 (Power Limit 2). The PL1 corresponds to the rated power of the CPU 11. The rated power is a threshold value for allowing a moving average value of the power consumption to temporarily exceed the value of PL1, but restricting the moving average value from steadily (for example, continuously for several seconds to several tens of seconds or more) exceeding this value. A window length (an observation period of an instantaneous value for calculating a moving average value at a certain time) used for the moving average is typically, for example, about 1 to 10s. The PL2 is a threshold value for restricting the power consumption of the CPU 11 from exceeding even temporarily. Generally, the CPU 11 executes more arithmetic processing as the clock frequency thereof is higher, and the power consumption increases accordingly. The CPU 11 includes a control mechanism which adjusts the clock frequency so that the instantaneous value of the power consumption does not exceed the PL2 and the moving average value of the power consumption does not exceed the PL1.

The standard mode is an operation mode which provides a standard function expected as the specification of the electronic apparatus 1. The standard mode is provided when the estimated surface temperature at that time is within a predetermined standard operation temperature range (which may be referred to as a "standard operation temperature" in the present application). The thermal protection mode is provided when the estimated surface temperature is within a predetermined discrete operation temperature range (which may be referred to as a "thermal protection operation temperature" in the present application). The thermal protection operation temperature is a temperature range including a temperature higher than the standard operation temperature. The thermal protection mode is an operation mode in which power consumption is lower than in the standard mode. The power control parameter according to the thermal protection mode is set to be smaller than the power control parameter according to the standard mode. Under the power consumption of a common CPU 11, the output value of the fan 364 in the thermal protection mode may be greater than the output value of the fan 364 in the standard mode.

The power management unit 110 monitors the estimated value of the surface temperature notified from the EC 31. When the operation mode at that time is the standard mode and the estimated surface temperature exceeds the upper limit of the standard operation temperature, the power management unit 110 changes the operation mode to the thermal protection mode. Further, the power management unit 110 notifies the EC 31 of the thermal protection mode which is the changed operation mode.

When the operation mode at that time is the thermal protection mode and the estimated surface temperature becomes less than or equal to the lower limit of the thermal protection operation temperature, the power management unit 110 changes the operation mode to the standard mode. The power management unit 110 notifies the EC 31 of the thermal protection mode as the changed operation mode.

Note that when the operation mode at that time is the thermal protection mode and the estimated surface temperature exceeds the upper limit of the thermal protection operation temperature, the power management unit 110 may change the operation mode to hibernation. The hibernation corresponds to a pause state in which the operations of the CPU 11 and the main memory 12 are stopped. The hibernation corresponds to an S4 state among system states defined in the ACPI (Advanced Configuration and Power Interface). On the other hand, the standard mode and the thermal protection mode correspond to an S0 state among the system states defined in the ACPI. When the operation mode is changed from the thermal protection mode to the hibernation, the power management unit 110 stops the execution of a program being executed. The power management unit 110 generates an image file including various intermediate data, parameters, and the like generated by the processing during the execution of the CPU 11, and stores (saves) the generated image file in the storage 23. The power management unit 110 also notifies the EC 31 of the hibernation as the operation mode. Thereafter, the CPU 11 ends its operation. Then, the EC 31 causes the drive circuit 362 to stop the supply of electric power to the CPU 11, the main memory 12, and the storage 23. Further, the EC 31 may cause the drive circuit 362 to stop the supply of electric power to the fan 364.

The transition from the hibernation to the standard mode or the thermal protection mode is conditional on the detection of an activation instruction. The EC 31 electrically or mechanically detects the contact of a contact point of the power supply switch 38, and starts energization from the power supply circuit 34 to the CPU 11, the main memory 12, and the storage 23. The CPU 11 reads the image file from the storage 23 and stores the read image file in the main memory 12. Thereafter, the CPU 11 resumes the execution of the program immediately before the change of the operation mode to the hibernation by using the read image file. Thus, the operation of the host system 10 is restarted.

When transitioning from the hibernation to the standard mode or the thermal protection mode, the EC 31 resumes the notification of the calculated estimated surface temperature to the host system 10. At this time, the EC 31 resumes the control of the operation of the fan 364 using the drive circuit 362.

The host system 10 resumes the operation in the standard mode when the estimated surface temperature notified from the EC 31 becomes less than or equal to the upper limit of the standard operation temperature. The host system 10 resumes the operation in the thermal protection mode when the estimated surface temperature notified from the EC 31 exceeds the upper limit of the standard operation temperature and becomes less than or equal to the lower limit of the standard operation temperature.

Note that when the estimated surface temperature exceeds the upper limit of the thermal protection operation temperature, the EC 31 does not start up the host system 10 and maintains the operation mode in hibernation. At this time, the EC 31 maintains a state in which the energization from the power supply circuit 34 to the CPU 11, the main memory 12, and the storage 23 is stopped without starting.

Next, a description will be made about an example of a control method of the electronic apparatus 1 according to the present embodiment.

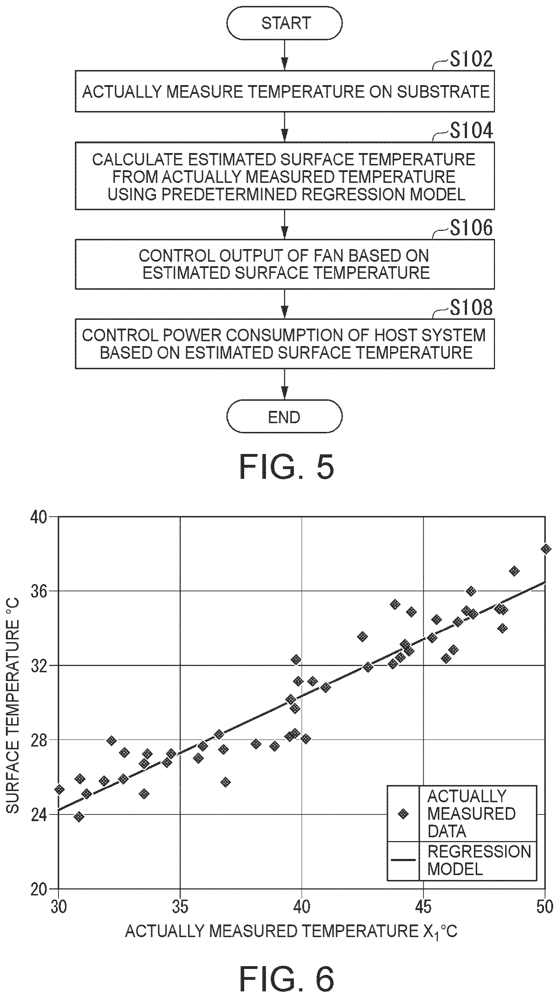

FIG. 5 is a flowchart illustrating the example of the control method of the electronic apparatus 1 according to the present embodiment.

(Step S102) The temperature sensors 35-1 and 35-2 arranged on the surface of the substrate 103 detect temperature respectively, and notify the EC 31 of the detected temperatures as actually measured temperatures $X_1$ and $X_2$.

(Step S104) The EC 31 calculates an estimated surface temperature $Y_{apu}$ using a predetermined mathematical model from the actually measured temperatures $X_1$ and $X_2$ notified from the temperature sensors 35-1 and 35-2. The EC 31 notifies the host system 10 of the calculated estimated surface temperature $Y_{apu}$.

(Step S106) the EC 31 controls the operation of the fan 364 based on the estimated surface temperature $Y_{apu}$. Here, the EC 31 refers to a preset control table to determine an output value of the fan 364 based on the estimated surface temperature $Y_{apu}$, and outputs a control signal indicating the determined output value to the drive circuit 362. The drive circuit 362 supplies electric power corresponding to the output value indicated by the control signal to the fan 364. Thus, the output of the fan 364 is controlled.

(Step S108) The power management unit 110 of the host system 10 determines an operation mode based on the estimated surface temperature $Y_{apu}$ notified from the EC 31, and sets a power control parameter according to the determined operation mode. Thus, the power consumption of the host system 10 is controlled. Thereafter, the processing of FIG. 5 is ended.

Next, a description will be made about an example of a regression model used to calculate the estimated surface temperature from the actually measured temperature. The parameters of the regression model are obtained by performing regression analysis (learning) on training data acquired in advance. One set of training data is configured by including a plurality of data sets. Each data set is configured by including an actually measured value (input value) of an explanatory variable and an actually measured value (output value) of an objective variable. According to the regression analysis, the parameters of the regression model are determined so that the index value of the magnitude of the difference between the estimated value and the actually measured value of the objective variable calculated using the mathematical model for the actually measured value of the explanatory variable is reduced (minimized) as the entire training data. In the regression model illustrated in Equation (1), the coefficients $M_1$ and $M_2$ and the constant $C_{apu}$ correspond to the parameters of the regression model. When determining the parameters of the regression model, a known regression analysis method can be used. As the regression method, for example, a least square method is used. In this case, for example, the square sum of the difference between the estimated value and the actually measured value is used as the index value of the magnitude of the difference.

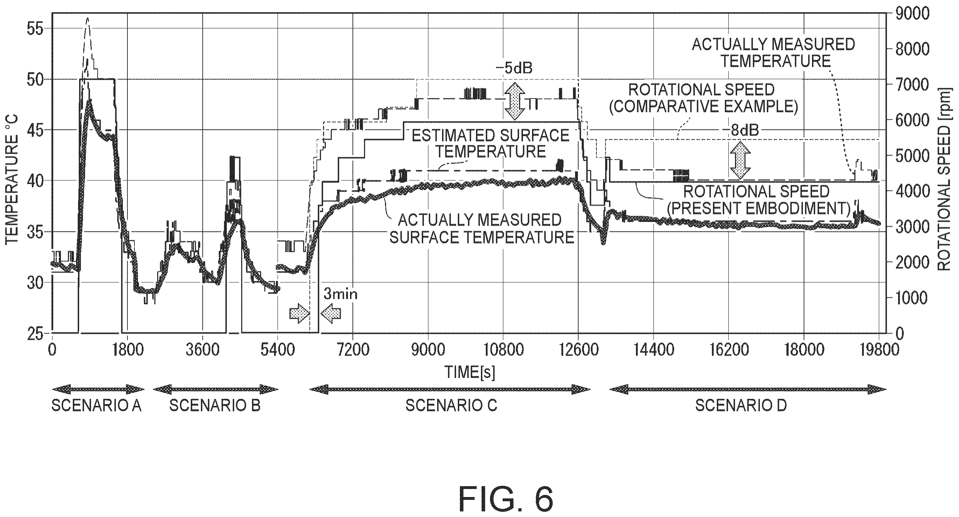

FIG. 6 is a diagram illustrating training data and a regression model. In FIG. 6, the vertical axis indicates the surface temperature, and the horizontal axis indicates the actually measured temperature $X_1$. However, the actually measured temperature $X_2$ is not illustrated. Each symbol indicates a set of the actually measured temperature $X_1$ and the actually measured value of the surface temperature for each dataset. The actually measured value of the surface temperature (which may be referred to as an "actually measured surface temperature" in the present application) is detected using a temperature sensor separated from the temperature sensors 35-1 and 35-2. The temperature sensor is installed at a reference point set in advance on the surface of the first chassis 102. Each dataset is configured by including an actually measured surface temperature detected at the same time as the actually measured temperatures $X_1$ and $X_2$. In FIG. 6, a straight line indicates the relationship between the actually measured temperature $X_1$ and the estimated surface temperature $Y_{apu}$ indicated by the regression model. By the regression analysis, the coefficients $M_1$ and $M_2$ being the parameters and the constant $C_{apu}$ are determined so as to obtain a regression model representative of the distribution of the dataset as the whole training data.

By using the regression model, the surface temperature at the reference point is estimated from the actually measured temperatures $X_1$ and $X_2$. The reference point may be, for example, any of any portion (for example, a central portion) of the bottom surface of the first chassis 102, a rear bezel on the peripheral edge of the exhaust port 102r, any point (for example, the track point 32t) on the keyboard 32k covering the surface of the first chassis 102, and the like. These positions are likely to be continuously or frequently touched by the user during the use of the electronic apparatus 1. By avoiding an abnormal temperature rise in the vicinity of the reference point at the time of its use, the user can use the electronic apparatus 1 without anxiety. Further, the reference point may be a position (for example, immediately above the CPU 11) where the temperature becomes the highest during the operation of the electronic apparatus 1, of the surface of the first chassis 102. Therefore, it is possible to reduce the possibility that the surface temperature of the first chassis 102 becomes higher with the estimated surface temperature at the reference point as an upper limit.

Next, a description will be made about a control example of the fan 364 according to the present embodiment. FIG. 7 is a diagram illustrating the control example of the fan 364. FIG. 7 illustrates temporal changes in the actually measured temperature $X_1$, the actually measured value of the actually measured surface temperature, the estimated surface temperature, and the rotational speed of the fan 364 observed by operating the electronic apparatus 1 under each of scenarios A to D. However, the actually measured temperature $X_2$ is not illustrated. The scenario A is an operation situation in which the CPU 11 is caused to execute a process instructed by a separate processing request issued intermittently while continuing image processing. The scenario B is an operation situation in which the CPU 11 is caused to execute a process instructed by a processing request issued intermittently without executing image processing. In the scenarios A and B, heat is generated mainly in the CPU 11 and the main memory 12. The scenario C is an operation situation in which the CPU 11 is caused to sequentially read a large amount of data stored in advance in the storage 23 and to transmit the read data using the WLAN module 25. The scenario D is an operation situation in which the CPU 11 is caused to sequentially receive data using the WLAN module 25 and to write the received data into the storage 23. In the scenarios C and D, heat is generated mainly from the CPU 11 and the main memory 12 and also generated in the WLAN module 25.

In FIG. 7, the rotational speeds obtained by the present embodiment and a comparative example are indicated by a solid line and a broken line, respectively. In the comparative example, the EC 31 determines the rotational speed of the fan 364 using the actually measured temperature $X_1$ without using the estimated surface temperature $Y_{apu}$.

In the scenarios A and B, there is no significant difference in the rotational speed of the fan 364 between the present embodiment and the comparative example. Further, the actually measured temperature $X_1$ and the estimated surface temperature or the actually measured surface temperature on the substrate are approximate to each other, and the difference therebetween is relatively small. On the other hand, in the scenarios C and D, there occurs a significant difference in the rotational speed of the fan 364 between the present embodiment and the comparative example. Thus, in the scenarios C and D, the correlation between the actually measured temperature and the surface temperature obtained in the scenarios A and B is not maintained. In the comparative example, even in a stage in which the surface temperature is relatively low, the fan 364 operates at an output higher than required.

In contrast, in the present embodiment, the output of the fan 364 is suppressed. In the scenario C, the rotational speed in the present embodiment is 5dB lower than that in the comparative example. In the scenario D, the rotational speed in the present embodiment is 8dB lower than that in the comparative example. That is, even when the actually measured temperature $X_1$ and the surface temperature on the substrate deviate from each other depending on the operation state, the operation of the fan 364 is suppressed using the estimated surface temperature. Further, even in the scenarios C and D, the difference between the actually measured surface temperature and the estimated surface temperature is about 1°C even at the maximum and is relatively small. This indicates that in the present embodiment, the surface temperature is estimated using the regression model so that the output of the fan 364 can be reduced economically without separately providing a temperature sensor for detecting the surface temperature. It is shown that the surface temperature is accurately estimated by using a plurality of temperature sensors arranged at different positions on the substrate 103 regardless of the difference in the operation state depending on the scenario.

Note that in the above example, the case in which the number of temperature sensors on the substrate is two has been mainly described, but the present invention is not limited thereto. The number N of the temperature sensors may be one or three or more. The EC 31 uses the regression model to calculate the estimated surface temperature from the actually measured temperatures detected by the N temperature sensors respectively. The regression model used to calculate the estimated surface temperature may be learned in advance using training data configured by including a data set in which N actually measured temperatures by the N temperature sensors are taken as explanatory variables and the actually measured surface temperature by the temperature sensor installed at the reference point is taken as an objective variable. Some or all of the N temperature sensors may be installed closer to a particular device than to other devices.

Further, the training data used for learning of the regression model may be configured by including at least one set of data set comprised of the explanatory variable and the objective variable for each scenario in which the operation state of a peripheral device differs.

The regression model is not limited to a linear regression model, but may be a non-linear regression model.

The electronic apparatus 1 is not necessarily limited to a laptop PC, but may be an electronic apparatus realized in another form such as a tablet terminal device.

As described above, in the electronic apparatus 1 according to the present embodiment, the controller (for example, the EC 31), the temperature sensor 35 which detects the temperature, and the fan 364 are accommodated inside the chassis (for example, the first chassis 102). The controller and the temperature sensor 35 are arranged on the substrate 103. The model (for example, the regression model) indicating the correlation between the actually measured temperature (for example, the actually measured temperatures $X_1$ and $X_2$) which is the temperature detected by the temperature sensor and the surface temperature which is the temperature at the reference point on the surface of the chassis is set in the controller in advance. The controller calculates the estimated value of the surface temperature (for example, the estimated surface temperature $Y_{apu}$) based on the actually measured temperature using the set model, and controls the operation of the fan 364 based on the calculated estimated value.

According to this configuration, the operation of the fan 364 is controlled based on the estimated value of the surface temperature calculated from the actually measured temperature. Therefore, even when the correlation between the surface temperature and the actually measured temperature varies depending on the operation situation, an unintended operation of the fan 364 or an increase in the output thereof is avoided, and an operation corresponding to the surface temperature is realized. Further, it is possible to avoid an increase in production cost due to the mounting of a new temperature sensor for detecting the surface temperature.

Also, the electronic apparatus 1 may include the host system 10, and the host system 10 may be arranged on the substrate 103 and control the power consumption of its own system based on the estimated value of the surface temperature.

According to this configuration, even when the correlation between the surface temperature and the actually measured temperature varies depending on the operation situation, the operation of the host system 10 is controlled according to the surface temperature.

Further, the electronic apparatus 1 may include two or more temperature sensors (for example, the temperature sensors 35-1 and 35-2), the model for calculating the surface temperature may indicate a correlation between a set of actually measured temperatures (for example, the actually measured temperatures $X_1$ and $X_2$) detected by the respective temperature sensors and the surface temperature (for example, the actually measured surface temperature), and the controller may calculate an estimated value of the surface temperature (for example, the estimated surface temperature $Y_{apu}$) based on the set of actually measured temperatures using the model.

The reference point of the surface temperature may be a position where the temperature is the highest on the surface of the chassis.

In addition, the reference point of the surface temperature may be any of the bottom surface of the chassis, the peripheral edge of the exhaust port of the chassis (for example, a rear bezel), the surface of the inputting device covering the chassis (for example, the keyboard 32k and the track point 32t), and the like.

According to this configuration, by using the actually measured temperatures detected at the different positions on the substrate 103, the surface temperature can be estimated more accurately than in the case where only one temperature sensor is used, even if there is a change in the correlation between the actually measured temperature and the surface temperature, based on fluctuations in the temperature distribution inside the chassis depending on the operation state.

In addition, in the electronic apparatus 1, the peripheral device (for example, the WLAN module 25) may be accommodated on the substrate inside the chassis, and the model for calculating the surface temperature may be set using training data comprised of one or more sets of the actually measured temperature and the surface temperature detected for each operation state of the peripheral device.

According to this configuration, the model for calculating the surface temperature from the actually measured temperature is obtained in consideration of the temperature distribution which is different for each scenario in which the operation state of the peripheral device is different. Therefore, the estimation accuracy of the actually measured temperature calculated from the actually measured temperature is further improved.

Although the embodiments of the present application have been described above in detail with reference to the drawings, specific configurations are not limited to the above-described embodiments, and designs and the like within the scope not departing from the gist of the present invention are also included. The respective configurations described in the above-described embodiments can be arbitrarily combined.

Description of Symbols

| | |
|---|---|
| 1 | electronic apparatus |
| 10 | host system |
| 11 | CPU |
| 12 | main memory |
| 21 | chipset |
| 22 | ROM |
| 23 | storage |
| 24 | display |

| 25 | WLAN module |
| 26 | input/output I/F |
| 31 | EC |
| 32 | input device |
| 32k | keyboard |
| 32t | track point |
| 33 | battery |
| 34 | power supply circuit |
| 35 (35-1, 35-2) | temperature sensor |
| 36 | heat dissipation mechanism |
| 38 | power supply switch |
| 102 | first chassis |
| 102r | exhaust port |
| 103 | substrate |
| 104 | second chassis |
| 108(108a, 108b) | hinge |
| 110 | power management unit |
| 362 | drive circuit |
| 364 | fan |
| 366 | heat pipe |

**Claims**

1. An electronic apparatus comprising:

   a controller;
   a temperature sensor configured to detect a temperature; and
   a fan,
   wherein the controller, the temperature sensor, and the fan are accommodated inside a chassis,
   wherein the controller and the temperature sensor are arranged on a substrate,
   wherein the controller is set in advance with a model indicating a correlation between an actually measured temperature which is a temperature detected by the temperature sensor, and a surface temperature which is a temperature at a reference point on a surface of the chassis, and
   wherein the controller is configured to use the model to calculate an estimated value of the surface temperature based on the actually measured temperature, and control an operation of the fan based on the estimated value.

2. The electronic apparatus according to claim 1, including a host system,
   wherein the host system is arranged on the substrate, and is configured to control the power consumption of the own host system based on the estimated value.

3. The electronic apparatus according to claim 1 or claim 2, including two or more of the temperature sensors,

   wherein the model indicates a correlation between a set of the actually measured temperatures detected for the respective temperature sensors and the surface temperature, and
   wherein the controller is configured to use the model to calculate an estimated value of the surface temperature based on the set of the actually measured temperatures.

4. The electronic apparatus according to any preceding claim, wherein the reference point comprises a position on the surface of the chassis where the temperature is the highest.

5. The electronic apparatus according to any preceding claim, wherein the reference point comprises any one of a bottom surface of the chassis, a peripheral edge of an exhaust port of the chassis, and a surface of an input device covering the chassis.

6. The electronic apparatus according to any preceding claim, including a peripheral device further accommodated inside the chassis,

   wherein the peripheral device is further arranged on the substrate, and

wherein the model is set with reference to one or more sets of the actually measured temperature and the surface temperature detected for each operation state of the peripheral device.

7. A control method of an electronic apparatus including a controller, a temperature sensor configured to detect a temperature, and a fan which are accommodated inside a chassis,

wherein the controller and the temperature sensor are arranged on a substrate, and
wherein a model indicating a correlation between an actually measured temperature which is a temperature detected by the temperature sensor, and a surface temperature which is a temperature at a reference point on a surface of the chassis is set in advance, the control method comprising the steps of:

calculating, by the electronic apparatus an estimated value of the surface temperature based on the actually measured temperature using the model; and
controlling an operation of the fan by the electronic apparatus based on the estimated value.

8. The control method according to claim 7, wherein the electronic apparatus includes a host system,
wherein the host system is arranged on the substrate, and the method comprises controlling, by the hose system, the power consumption of the own host system based on the estimated value.

9. The control method according to claim 7 or claim 8, wherein the electronic apparatus includes two or more of the temperature sensors,

wherein the model indicates a correlation between a set of the actually measured temperatures detected for the respective temperature sensors and the surface temperature, and
wherein the method comprises the controller using the model to calculate an estimated value of the surface temperature based on the set of the actually measured temperatures.

10. The control method according to any one of claims 7 to 9, wherein the reference point comprises a position on the surface of the chassis where the temperature is the highest.

11. The control method according to any one of claims 7 to 10, wherein the reference point comprises any one of a bottom surface of the chassis, a peripheral edge of an exhaust port of the chassis, and a surface of an input device covering the chassis.

12. The control method according to any one of claims 7 to 11, wherein the electronic apparatus includes a peripheral device further accommodated inside the chassis,

wherein the peripheral device is further arranged on the substrate, and
wherein the model is set with reference to one or more sets of the actually measured temperature and the surface temperature detected for each operation state of the peripheral device.

FIG. 1

FIG. 2

1

102r

102

103

366

25 — 35-2

364

WLAN MODULE

12

MAIN MEMORY

11

CPU

35-1

23

21

22

STORAGE

CHIPSET

ROM

26

34

31

POWER
SUPPLY CIRCUIT

EC

33

BATTERY

## FIG. 3

1

10

HOST SYSTEM

110

POWER
MANAGEMENT UNIT

31

362

EC

DRIVE CIRCUIT

35-1

35-2

364

TEMPERATURE
SENSOR

TEMPERATURE
SENSOR

HEAT DISSIPATION FAN

## FIG. 4

START

ACTUALLY MEASURE TEMPERATURE ON SUBSTRATE — S102

CALCULATE ESTIMATED SURFACE TEMPERATURE
FROM ACTUALLY MEASURED TEMPERATURE
USING PREDETERMINED REGRESSION MODEL — S104

CONTROL OUTPUT OF FAN BASED ON
ESTIMATED SURFACE TEMPERATURE — S106

CONTROL POWER CONSUMPTION OF HOST SYSTEM
BASED ON ESTIMATED SURFACE TEMPERATURE — S108

END

FIG. 5

FIG. 6

FIG. 6

## EUROPEAN SEARCH REPORT

**Application Number**

EP 25 20 2808

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/033920 A1 (NIELSEN GREGORY ALLEN [US] ET AL) 30 January 2020 (2020-01-30) * paragraph [0014] - paragraph [0089] * * figures 1-4 * ----- | 1-12 | INV. G06F1/20 |
| X | US 2011/301778 A1 (LIANG FRANK FAQIU [US] ET AL) 8 December 2011 (2011-12-08) * paragraph [0006] - paragraph [0007] * * paragraph [0016] - paragraph [0055] * * figures 1-4 * ----- | 1-12 | |

**TECHNICAL FIELDS SEARCHED (IPC)**

G06F

The present search report has been drawn up for all claims

| Place of search | Date of completion of the search | Examiner |
|---|---|---|
| The Hague | 9 February 2026 | Knutsson, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2808

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | Publication date | Patent family member(s) | Publication date |
|---|---|---|---|
| US 2020033920 A1 | 30-01-2020 | NONE | |
| US 2011301778 A1 | 08-12-2011 | NONE | |

EPO FORM P0459

For more details about this annex : see Official Journal of the European Patent Office, No. 12/82

**EP 4 733 893 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014078199 A